# EUROPEAN PATENT SPECIFICATION

(11) **EP 3 353 446 B1**
(45) Date of publication and mention of the grant of the patent: **26.05.2021**
(21) Application number: 16848042.4
(22) Date of filing: 13.09.2016
(51) Int. Cl.: F16H 48/11, F16H 48/10

(54) **DIFFERENTIAL, POWER TRANSMISSION SYSTEM AND VEHICLE**
DIFFERENTIAL, KRAFTÜBERTRAGUNGSSYSTEM UND FAHRZEUG
DIFFÉRENTIEL, SYSTÈME DE TRANSMISSION DE PUISSANCE ET VÉHICULE

(30) Priority: 25.09.2015 CN 201510624400
(43) Date of publication of application: 01.08.2018
(73) Proprietor: BYD Company Limited, Shenzhen, Guangdong 518118 (CN)
(72) Inventor: LING, Heping, Shenzhen Guangdong 518118 (CN); ZHAI, Zhen, Shenzhen Guangdong 518118 (CN); ZHENG, Feng, Shenzhen Guangdong 518118 (CN); XU, Youbin, Shenzhen Guangdong 518118 (CN)
(74) Representative: Grunert, Marcus
(86) International application number: PCT/CN2016/098899
(87) International publication number: WO 2017/050160

(56) References cited:
- CN-A- 101 598 209
- CN-A- 103 511 583
- CN-A- 103 573 961
- CN-A- 103 671 810
- CN-A- 103 775 601
- DE-A1-102012 207 498
- DE-A1-102012 207 498
- DE-A1-102012 216 404
- DE-A1-102014 102 252

## Description

### FIELD

The present invention relates to a differential, a power transmission system having the differential, and a vehicle having the power transmission system.

### BACKGROUND

In a differential technology, a differential includes a driven gear of a final drive, a planetary gear, a center gear, and the like. The planetary gear is mounted on a secondary plate of the driven gear through a square shaft and a shaft sleeve and is meshed with the center gear, so as to implement revolution and moving functions thereof by a revolution pair and a planar moving pair. The center gear is connected to two half shafts, namely left and right half shafts, through an angular alignment pin and a cylindrical pair or through a spline to achieve an objective of outputting torque. Original components, such as left and right housings and a planetary gear shaft of the differential, are omitted from such the differential, and instead, the planetary gear is directly mounted on the secondary plate of the driven gear of the final drive by using the square shaft and the shaft sleeve, thereby effectively reducing a number of parts of the differential, simplifying the structure thereof, and reducing the weight thereof.

DE 10 2012 207 498 A1 refers to a differential with a circular carrier as well as with two gear rings. A first gear ring is arranged on a first side of the circular carrier and a second gear ring is provided on a second side of the carrier. The circular carrier has a width B such that there is a distance B between an end surface of the first gear ring and an end surface of the second gear ring, wherein this distance B is equal to the thickness of the carrier.

DE 10 2012 216 404 A1 and DE 10 2014 102 252 A1 each also disclose a differential with two gear rings and a circular carrier between the gear rings.

However, such a differential implements an inter-wheel speed differential by using a symmetrical angle gear structure, which is only a partial innovation for a conventional symmetrical angle gear differential and cannot really overcome disadvantages thereof. For example, an axial dimension of such a differential structure is excessively large, masses of the housing and the angle gear therein are heavy, and reliability thereof is relatively poor.

### SUMMARY

The present invention aims at solving at least one of the foregoing technical problems in the prior art to some extent.

The present invention relates to a differential, a power transmission system having the differential, and a vehicle having the power transmission system according to the independent claims.

Therefore, embodiments of the present invention provide a differential, which implements a speed differential function by using a planetary differential principle, has a compact and simple structure, and can at least reduce an axial dimension thereof.

Embodiments of the present invention further provide a power transmission system having the differential according to above embodiments of the present dislcosure.

Embodiments of the present invention further provide a vehicle having the power transmission system according to above embodiments of the present invention.

The differential according to embodiments of the present invention implements a speed differential function by using a planetary differential principle, has a high space utilization ratio in terms of structure and connection form, provides a small axial dimension, and also have much advantages in production and assembly.

The power transmission system according to embodiments of the present invention comprises the differential according to the foregoing embodiments of the present invention.

The vehicle according to embodiments of the present invention comprises the power transmission system according to the foregoing embodiment of the present invention.

### BRIEF DESCRIPTION OF THE DRAWINGS

These and other aspects and advantages of embodiments of the present invention will become apparent and more readily appreciated from the following descriptions made with reference to the drawings, in which:
FIG. 1 is an exploded view of a differential according to a preferred embodiment of the present invention from a perspective;
FIG. 2 is another exploded view of a differential according to a preferred embodiment of the present invention from another perspective;
FIG. 3 is a planar schematic diagram showing a principle of a differential according to a preferred embodiment of the present invention;
FIG. 4 is a perspective view of an assembled differential according to a preferred embodiment of the present invention;
FIG. 5 is a schematic diagram showing positions of a first gear ring and a second gear ring in a preferred embodiment of the present invention;
FIG. 6 is a schematic diagram showing positions of a first gear ring and a second gear ring in anon claimed embodiment;
FIG. 7 is a schematic diagram showing positions of a first gear ring and a second gear ring in still another preferred embodiment of the present invention;
FIG. 8 is a partial schematic view of a differential according to a preferred embodiment of the present invention;
FIG. 9 is a perspective view of a first planetary gear and a second planetary gear according to a preferred embodiment of the present invention;
FIG. 10 is a brief diagram illustrating a meshing principle between a first planetary gear and a second planetary gear according to a preferred embodiment of the present invention;
FIG. 11 is a perspective view of a first gear ring or a second gear ring according to a preferred embodiment of the present invention;
FIG. 12 is a perspective view of a first gear ring or a second gear ring according to another preferred embodiment of the present invention;
FIG. 13 is a schematic diagram of a power transmission system according to a preferred embodiment of the present invention; and
FIG. 14 is a schematic diagram of a vehicle according to a preferred embodiment of the present invention.

### DETAILED DESCRIPTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

In the description of the present invention, it should be understood that, location or position relationships indicated by the terms, such as "center", "longitude", "transverse", "length", "width", "thickness", "up", "down", "front", "rear", "left", "right", "vertical", "horizon", "top", "bottom", "inside", "outside", "clockwise", and "counterclockwise", are location or position relationships based on illustration of the accompanying drawings, are merely used for describing the present invention and simplifying the description instead of indicating or implying the indicated apparatuses or elements should have specified locations or be constructed and operated according to specified locations, and therefore, should not be intercepted as limitations to the present invention.

In addition, the terms such as "first" and "second" are used merely for the purpose of description, but shall not be construed as indicating or implying relative importance or implicitly indicating a number of the indicated technical feature. Hence, the feature defined with "first" and "second" may explicitly or implicitly include one or more of features. In the description of the present invention, unless otherwise explicitly specifically defined, "a plurality of" means at least two, for example, two or three.

In the present invention, unless otherwise explicitly specified or defined, the terms such as "mount", "connect", "connection", and "fix" should be interpreted in a broad sense. For example, a connection may be a fixed connection, or may be a detachable connection or an integral connection; a connection may be a mechanical connection, or may be an electrical connection; a connection may be a mechanical connection, or may be an electrical connection, or may be used for intercommunication; a connection may be a direct connection, or may be an indirect connection via an intermediate medium, or may be communication between interiors of two elements or an interaction relationship between two elements. It may be appreciated by those of ordinary skill in the art that the specific meanings of the aforementioned terms in the present invention can be understood depending on specific situations.

In the present invention, unless otherwise explicitly specified or defined, a first feature being "above" or "under" a second feature may include that the first and second features are in direct contact and may also include that the first and second features are not in direct contact but are in contact by means of another feature therebetween. In addition, the first feature being "over", "above" or "on the top of" a second feature may include that the first feature is over or above the second feature or merely indicates that the horizontal height of the firs feature is higher than that of the second feature. The first feature being "underneath", "below" or "on the bottom of" a second feature may include that the first feature is underneath or below the second feature or merely indicates that the horizontal height of the first feature is lower than that of the second feature.

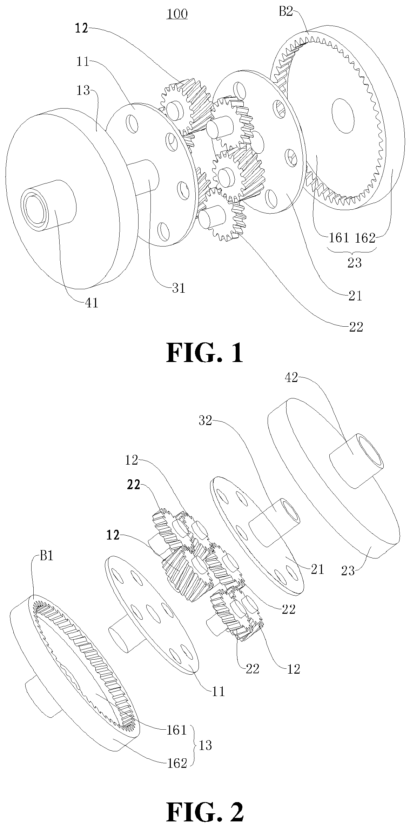

A differential 100 according to a preferred embodiment of the present invention is described in detail by referring to FIG. 1 to FIG. 14. The differential 100 may be used for an inter-wheel speed differential or an inter-shaft speed differential. Taking the inter-wheel speed differential as an example, the differential 100 can enable left and right driving wheels to roll at different angular velocities when a vehicle is traveling on an uneven road or turning, so as to ensure pure rolling movements between the driving wheels on two sides and the ground.

As shown in FIG. 1 and FIG. 2, the differential 100 according to some embodiments of the present invention comprises a first planetary carrier 11, a first planetary gear 12, and a first gear ring 13 as well as a second planetary carrier 21, a second planetary gear 22, and a second gear ring 23.

With references to embodiments of FIG. 1 and FIG. 2, both the first planetary carrier 11 and the second planetary carrier 21 may be configured as circular plate-shaped structures, so as to reduce an axial dimension of the differential 100 to some extent. In some embodiments, the first planetary carrier 11 and the second planetary carrier 21 may be configured as separated structures, i.e., the first planetary carrier 11 and the second planetary carrier 21 are separated from each other. Because it is relatively easy to mold an individual small component, separately and individually machining the first planetary carrier 11 and the second planetary carrier 21 can simplify a corresponding manufacturing process and improve machining precision thereof.

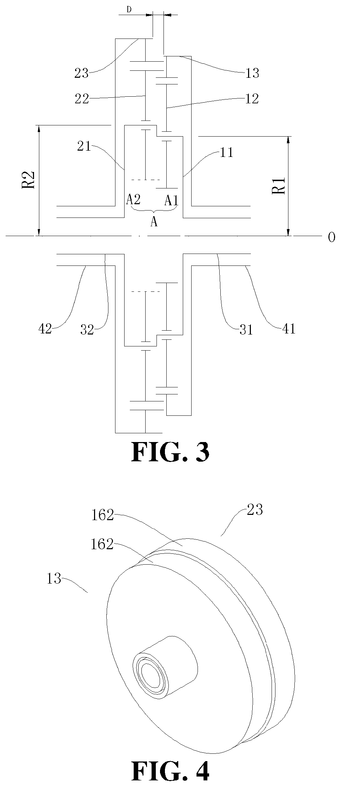

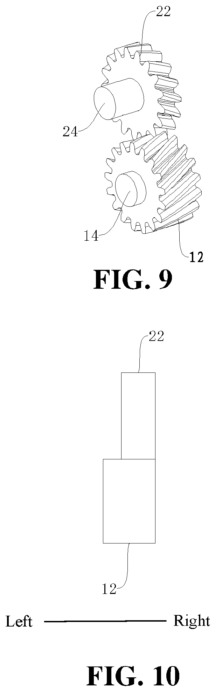

As shown in FIG. 3 in combination with FIG. 1, FIG. 2, and FIG. 9, the first planetary gear 12 is disposed on the first planetary carrier 11. For example, each first planetary gear 12 is provided with a first planetary gear shaft 14 (as shown in FIG. 9), two ends of the first planetary gear shaft 14 may be rotatably carried on the first planetary carrier 11 and the second planetary carrier 21 respectively. In a preferred embodiment, the two ends of the first planetary gear shaft 14 may be rotatably carried in shaft holes corresponding to each other in the first planetary carrier 11 and the second planetary carrier 21 by means of bearings, and the first planetary gear 12 may be fixed to the corresponding first planetary gear shaft 14. In some embodiments, the two ends of the first planetary gear shaft 14 may be fixedly connected to the first planetary carrier 11 and the second planetary carrier 21. For example, the two ends of the first planetary gear shaft 14 are respectively welded and fixed to the shaft holes corresponding to each other in the first planetary carrier 11 and the second planetary carrier 21, and the first planetary gear 12 is rotatably fitted over the corresponding first planetary gear shaft 14. For example, the first planetary gear 12 is rotatably fitted over the first planetary gear shaft 14 by means of a bearing. Hence, an objective of connecting the first planetary carrier 11 with the second planetary carrier 21 may be implemented by using the first planetary gear shaft 14, so as to enable the first planetary carrier 11 and the second planetary carrier 21 to move at a same speed and in a same direction (that is, a linkage between the first planetary carrier 11 and the second planetary carrier 21 is carried out). In addition, by means of this connection manner, the first planetary carrier 11 and the second planetary carrier 21 can favorably carry or fix the first planetary gear shaft 14, so as to prevent the differential 100 from being failed due to a disconnection between the first planetary gear shaft 14 and an individual planetary carrier.

The first planetary gear 12 is meshed with the first gear ring 13, specifically in an internal meshing form, that is, the first planetary gear 12 is located at an inner side of the first gear ring 13 and is meshed with teeth on the first gear ring 13. In some embodiments, a plurality of first planetary gears 12 are provided, and distributed at the inner side of the first gear ring 13 at equal angle intervals along a circumferential direction. For example, in an embodiment, three first planetary gears 12 may be provided and an interval angle between any two adjacent first planetary gears 12 is 120°.

Similarly, as shown in FIG. 3 in combination with FIG. 1, FIG. 2, and FIG. 9, the second planetary gear 22 is disposed on the second planetary carrier 21. For example, each second planetary gear 22 is provided with a second planetary gear shaft 24, two ends of the second planetary gear shaft 24 may be rotatably carried in shaft holes corresponding to each other in the first planetary carrier 11 and the second planetary carrier 21 by means of bearings, and the second planetary gear 22 may be fixed to the corresponding second planetary gear shaft 24. The two ends of the second planetary gear shaft 24 may also be fixedly connected to the first planetary carrier 11 and the second planetary carrier 21. For example, the two ends of the second planetary gear shaft 24 are respectively welded and fixed to the shaft holes corresponding to each other in the first planetary carrier 11 and the second planetary carrier 21, and the second planetary gear 22 is rotatably fitted over the corresponding second planetary gear shaft 24. For example, the second planetary gear 22 is rotatably fitted over the second planetary gear shaft 24 by means of a bearing. Hence, the objective of connecting the first planetary carrier 11 with the second planetary carrier 21 may be implemented by using the second planetary gear shaft 24, so as to enable the first planetary carrier 11 and the second planetary carrier 21 to move at a same speed and in a same direction. In addition, by means of this connection manner, the first planetary carrier 11 and the second planetary carrier 21 can favorably carry or fix the second planetary gear shaft 24, so as to prevent the differential 100 from being failed due to a disconnection between the second planetary gear shaft 24 and an individual planetary carrier.

In addition, in some other embodiments of the present invention, in order to enable the first planetary carrier 11 and the second planetary carrier 21 to move at a same speed and in a same direction, the first planetary carrier 11 may also be directly and fixedly connected to the second planetary carrier 21 by means of an intermediate component. That is, movements of the first planetary carrier 11 and the second planetary carrier 21 at a same speed and in a same direction in the foregoing embodiment are implemented by using the first planetary gear shaft 14 and the second planetary gear shaft 24. However, in this embodiment, the movements of the first planetary carrier 11 and the second planetary carrier 21 at a same speed and in a same direction may be implemented directly by disposing the intermediate component. For example, the intermediate component may be located between the first planetary carrier 11 and the second planetary carrier 21, and be welded and fixed to the first planetary carrier 11 and the second planetary carrier 21 respectively.

The second planetary gear 22 is meshed with the second gear ring 23, specifically in an internal meshing form. That is, the second planetary gear 22 is located at an inner side of the second gear ring 23 and is meshed with teeth on the second gear ring 23. In some embodiments, a plutality of second planetary gears 22 are provided, and distributed at the inner side of the second gear ring 23 at equal angle intervals along a circumferential direction. For example, in a preferred embodiment, three second planetary gears 22 may be provided and an interval angle between any two adjacent second planetary gears 22 is 120°.

It should be noted that FIG. 3 is a planar schematic diagram showing a principle of a differential 100 according to a preferred embodiment of the present invention, in which a meshing relationship between the first planetary gear 12 and the second planetary gear 22 and meshing relationships between the first planetary gear 12 and the first gear ring 13 and between the second planetary gear 22 and the second gear ring 23 are illustratively shown. Because FIG. 3 is a planar diagram and shows the foregoing three meshing relationships at the same time, relative position relationships among components are merely illustrative and do not indicate or imply positions of the components in an actual spatial disposition.

In the embodiment in which the plurality of first planetary gears 12 and the plurality of second planetary gears 22 are provided, the plurality of first planetary gears 12 are correspondingly meshed with the plurality of second planetary gears 22 respectively. For example, as shown in FIG. 1, FIG. 2, and FIG. 8, three first planetary gears 12 and three second planetary gears 22 are provided, the first one of the three first planetary gears 12 may be meshed with the corresponding first one of the tree second planetary gears 22, the second one of the tree first planetary gears 12 may be meshed with the corresponding second one of the tree second planetary gears 22, and the third one of the tree first planetary gears 12 may be meshed with the corresponding third one of the tree second planetary gears 22. In this way, multiple groups of the first planetary gear 12 and the second planetary gear 22 meshed with each other are provided. When the differential 100 transmits power, transmission of the power among the multiple groups of the first planetary gear 12 and the second planetary gear 22 meshed with each other is more stable and reliable.

In addition, in another preferred embodiment in which the plurality of first planetary gears 12 and the plurality of second planetary gears 22 are provided, the plurality of first planetary gears 12 and the plurality of second planetary gears 22 are alternately disposed along the circumferential direction, and the first planetary gear 12 is meshed with the second planetary gear 22 adjacent thereto. That is, in this embodiment, the plurality of first planetary gears 12 and the plurality of second planetary gears 22 are alternately disposed along the circumferential direction to form a ring, each first planetary gear 12 is meshed with two second planetary gears 22 adjacent thereto, and similarly, each second planetary gear 22 is meshed with two first planetary gears 12 adjacent thereto.

With reference to the preferred embodiment of FIG. 3, a revolution axis of the first planetary gear 12 conincides with a revolution axis of the second planetary gear 22, i.e., the first planetary gear 12 and the second planetary gear 22 have a same revolution axis O.

In a preferred embodiment, as shown in FIG. 1 to FIG. 3 and FIG. 8 to FIG. 10, the first planetary gear 12 is meshed with and fitted with the second planetary gear 22. In other words, the first planetary gear 12 is meshed with the first gear ring 13 and also is meshed with the second planetary gear 22 at the same time, and the second planetary gear 22 is meshed with the second gear ring 23 and also is meshed with the first planetary gear 12 at the same time.

As shown in FIG. 3, the first gear ring 13 and the second gear ring 23 are configured as two power output ends of the differential 100, and the first planetary carrier 11 and the second planetary carrier 21 correspondingly are configured as two power input ends of the differential 100 (for example, at this time, the first planetary carrier 11 and the second planetary carrier 21 may be rigidly connected together). In this way, power output from an external power source may be input through the first planetary carrier 11 and the second planetary carrier 21, and may be further output through the first gear ring 13 and the second gear ring 23 after a speed differential action of the differential 100. In this way, in an alternative implementation manner, the first planetary carrier 11 and the second planetary carrier 21 may be connected to a power source such as an engine or a motor, and the first gear ring 13 and the second gear ring 23 may be connected to corresponding half shafts through gear transmission structures, and the half shafts are further connected to corresponding wheels, which, however, is not limited to this.

A working principle of the differential 100 is briefly described by taking the following example that the differential 100 is applied to the inter-wheel speed differential, the first gear ring 13 and the second gear ring 23 are configured as the power output ends of the differential 100, and the first planetary carrier 11 and the second planetary carrier 21 are configured as the power input ends of the differential 100, in which, at this time, the first gear ring 13 may be connected to a left half shaft through, for example, a gear transmission structure, and the left half shaft may be connected to a left-side wheel, the second gear ring 23 may be connected to a right half shaft through, for example, a gear transmission structure, and the right half shaft may be connected to a right-side wheel, and the power output by a power source, such as an engine and/or a motor, may be output to the first planetary carrier 11 and the second planetary carrier 21 after a deceleration action of a final drive. If the vehicle travels on an even road and does not turn, the left-side wheel and the right-side wheel theoretically have a same rotation speed, and at this time, the differential 100 does not perform the speed differential action, such that the first planetary carrier 11 and the second planetary carrier 21 rotate at a same speed and in a same direction, and the first gear ring 13 and the second gear ring 23 rotate at a same speed and in a same direction, i.e., the first planetary gear 12 and the second planetary gear 22 only revolve and do not rotate. If the vehicle is traveling on an uneven road or is turning, the left-side wheel and the right-side wheel theoretically have different rotation speeds, and the first gear ring 13 and the second gear ring 23 also have different rotation speeds, that is, a rotation speed difference exists, and thus, at this time, the first planetary gear 12 and the second planetary gear 22 rotate while revolving. Rotations of the first planetary gear 12 and the second planetary gear 22 may accelerate one of the first gear ring 13 and the second gear ring 23 and decelerate the other one of the first gear ring 13 and the second gear ring 23, and a rotation speed difference between the accelerated gear ring and the decelerated gear ring is a rotation speed difference between the left and right wheels, thereby implementing the speed differential action.

Hence, the differential 100 according to preferred embodiments of the present invention utilizes a planetary differential principle, has a high space utilization ratio in terms of the structure and connection form, provides a small axial dimension, and also has much advantages in production and assembly. Such a structural form can avoid dimension defects of an angle gear in axial and radial directions thereof, and also can additionally utilize a hollow space inside a driven gear of a final drive preferably, thereby achieving the high space utilization ratio, greatly facilitating the entire vehicle arrangement in which the differential 100 is assembled and meeting limitations requirements to the weight and size. Meanwhile, the differential 100 according to preferred embodiments of the present invention has high reliability and preferable transmission efficiency, which is beneficial to improving reliability of a power transmission chain and smoothness of power output during turning, and thus is more practical with respect to a symmetrical angle gear differential.

According to the present invention, the first planetary gear 12 and the second planetary gear 22 have different revolution radiuses. That is, as shown in FIG. 3, a revolution radius of the first planetary gear 12 refers to a radius R1 by which the first planetary gear 12 revolves around the revolution axis O, and a revolution radius of the second planetary gear 22 refers to a radius R2 by which the second planetary gear 22 revolves around the revolution axis O. As shown in FIG. 3, R1≠R2, for example R2>R1. That is, revolution tracks of the first planetary gear 12 and the second planetary gear 22 are staggered from each other in a radial direction. In an example of the present invention, the revolution radius of the first planetary gear 12 is relatively small and the revolution radius of the second planetary gear 22 is relatively large.

Because the revolution radiuses of the first planetary gear 12 and the second planetary gear 22 are different, an inside diameter dimension of the first gear ring 13 is also different from an inside diameter dimension of the second gear ring 23 in some embodiments. A gear ring corresponding to a planetary gear (for example, the first planetary gear 12) having a relatively small revolution radius has a relatively small inside diameter dimension, that is, the planetary gear having the relatively small revolution radius is corresponding to a small gear ring (for example, the first gear ring 13) having a relatively small radius, and a gear ring corresponding to a planetary gear (for example, the second planetary gear 22) having a relatively large revolution radius has a relatively large inside diameter dimension, that is, the planetary gear having the relatively large revolution radius is corresponding to a large gear ring (for example, the second gear ring 23) having a relatively large radius. In this way, the large gear ring (i.e., the second gear ring 23) and the small gear ring (i.e., the first gear ring 13) are staggered from each other in the radial direction, so as to prevent moving components, such as the gear rings and the planetary gears, from generating movement interference thereamong, thereby effectively reducing an axial gap between the first gear ring 13 and the second gear ring 23. For example, with reference to FIG. 3, FIG. 5, and FIG. 6, the axial gap is denoted by D, and by reducing the axial gap D, the axial dimension of the differential 100 is allowed to be smaller and the structure thereof is allowed to be more compact.

Structures of the first gear ring 13 and the second gear ring 23 are described in detail with reference to embodiments as follows.

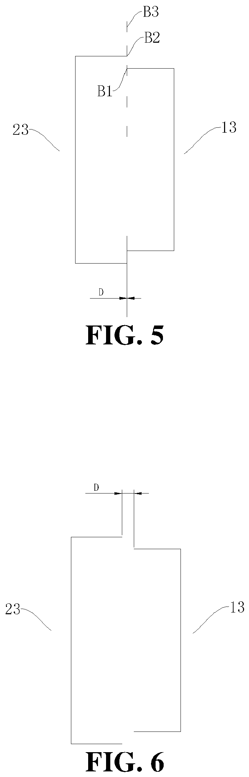

As shown in FIG. 5 in combination with FIG. 1 and FIG. 2, according to a first aspect of the present invention, an end surface B1, facing the second gear ring 23, of the first gear ring 13 (referring to FIG. 2) and an end surface B2, facing the first gear ring 13, of the second gear ring 23 (referring to FIG. 1) are located in a same plane B3 (referring to FIG. 5). In other words, as shown in FIG. 5, the end surface B1 and the end surface B2 are located in the plane B3 at the same time, that is, the end surface B1 and the end surface B2 overlap the plane B3 respectively. Hence, the gap D between the first gear ring 13 and the second gear ring 23 in the axial direction is zero (as shown in FIG. 5). In this way, the axial dimension of the differential 100 may be greatly reduced, allowing a volume of the differential 100 to be smaller and the structure thereof to be more compact, and thus facilitating the arrangement of the entire power transmission system.

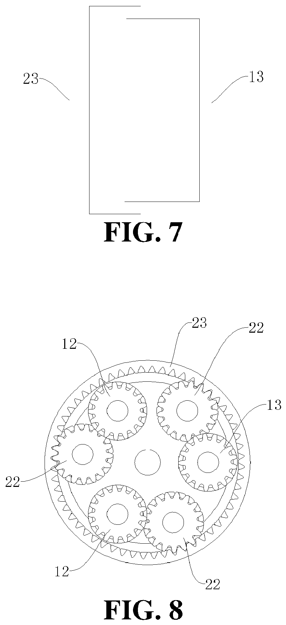

In an alternative aspect of the present invention, as shown in FIG. 7, one of the first gear ring 13 and the second gear ring 23, which has a relatively small radius, i.e., the small gear ring (for example the first gear ring 13), is at least partially embedded into the other gear ring thereof having a relatively large radius, i.e., the large gear ring (for example the second gear ring 23), and thus the gap D between the first gear ring 13 and the second gear ring 23 in the axial direction may be interpreted to be negative. Hence, the axial dimension of the differential 100 can also be reduced, and meanwhile, parts inside the two gear rings can be preferably protected by the first gear ring 13 and the second gear ring 23.

In some non claimed embodiments, as shown in FIG. 6, the first gear ring 13 and the second gear ring 23 may also be staggered from each other in the axial direction and spaced from each other by a certain distance D. It could be understood that merely in terms of reducing the axial dimension of the differential 100, the embodiment of FIG. 5 in which the gap D is zero and the embodiment of FIG. 7 in which the gap D is negative are preferable than the embodiment of FIG. 6 (the gap D in the embodiment of FIG. 6 is positive).

It should be noted that in the embodiments of FIG. 1 to FIG. 3 and FIG. 5 to FIG. 7, both of the first gear ring 13 and the second gear ring 23 include a main flat plate portion 161 and an annular sidewall portion 162, and thus the foregoing gap D in FIG. 3 (in combination with FIG. 1, FIG. 2, and FIG. 5 to FIG. 7) refers to a distance between the annular sidewall portion 162 of the first gear ring 13 and the annular sidewall portion 162 of the second gear ring 23.

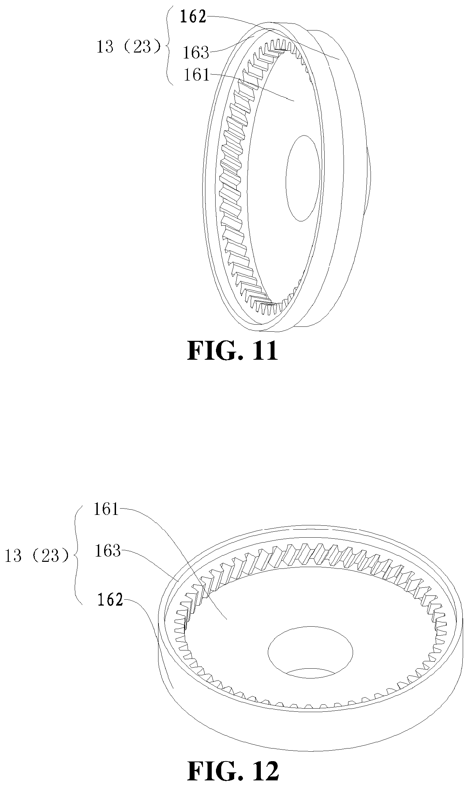

Moreover, in some other preferred embodiments of the present invention, for example, with reference to the embodiments of FIG. 11 and FIG. 12, each of the first gear ring 13 and the second gear ring 23 further includes an annular flange portion 163, and the annular flange portion 163 extends from an end surface of the annular sidewall portion 162 in a direction of departing from the main flat plate portion 161. In the embodiment of FIG. 11, an inner diameter of the annular flange portion 163 may be approximately equal to an outside diameter of the annular sidewall portion 162, which is equivalent to that the annular flange portion 163 protrudes radially outwards beyond the annular sidewall portion 162 (i.e., a peripheral surface of the first gear ring 13 or the second gear ring 23). Further, in the embodiment of FIG. 12, the outside diameter of the annular flange portion 163 may be approximately equal to the outside diameter of the annular sidewall portion 162, and the inside diameter of the annular flange portion 163 may be larger than the inside diameter of the annular sidewall portion 162, that is, a thickness of the annular flange portion 163 is smaller than a thickness of the annular sidewall portion 162.

However, it should be noted that in the gear ring structure in the embodiments of FIG. 1 to FIG. 3 and FIG. 5 to FIG. 7, the gap D between the two gear rings refers to a gap between the annular sidewall portions 162 of the two gear rings. Moreover, in the gear ring structure in the embodiments of FIG. 11 and FIG. 12, the gap D between the two gear rings refers to a gap between the annular flange portions 163 of the two gear rings.

With respect to the aspect in which the small gear ring is embedded into the large gear ring, as shown in FIG. 1 and FIG. 2 in combination with FIG. 3, each of the first gear ring 13 and the second gear ring 23 may include a main flat plate portion 161 and an annular sidewall portion 162 disposed at a peripheral edge of the main flat plate portion 161, and the main flat plate portion 161 and the annular sidewall portion 162 may be integrally molded components. Multiple gear teeth are disposed on an inner wall surface of the annular sidewall portion 162, in which, as shown in FIG. 4, an annular sidewall portion 162 of the small gear ring having the relatively small radius (namely, the first gear ring 13) is at least partially embedded into an annular sidewall portion 162 of the large gear ring having the relatively large radius (namely, the second gear ringe 23).

With respect to the aspect in which the small gear ring is embedded into the large gear ring, the gear structures in FIG. 11 and FIG. 12 may also be used. For example, the large gear ring may be configured as the gear ring structure in FIG. 11 or FIG. 12, that is, the large gear ring has an annular flange portion 163, the small gear ring may be configured as the common gear ring structure (without the annular flange portion 163) in FIG. 1 to FIG. 3, and in this way, the annular sidewall portion 162 of the small gear ring may be at least partially embedded into the annular flange portion 163 of the large gear ring. Alternatively, both of the small gear ring and the large gear ring may be configured as the gear ring structure in FIG. 11 and FIG. 12, and in this way, the annular flange portion 163 of the small gear ring is at least partially embedded into the annular flange portion of the large gear ring, which is not limited to this.

In addition, it could be understood that although several embodiments in which the small gear ring is embedded into the large gear ring are provided above, they should not be construded to limit the protection scope of the present invention. After reading the foregoing content of the description, those skilled in the art may fully understand the embedding principle of the gear rings and make similar modifications to the foregoing small gear ring and/or large gear ring in terms of structure, which also fall within the protection scope of the present invention.

As shown in FIG. 3, a cavity A1 or A2 is defined between the main flat plate portion 161 and the annular sidewall portion 162 (referring to FIG. 3). In an embodiment, a cavity A1 is defined by the main flat plate portion 161 and the annular sidewall portion 162 of the first gear ring 13, a cavity A2 is defined between the main flat plate portion 161 and the annular sidewall portion 162 of the second gear ring 23, and the cavity A1 inside the first gear ring 13 and the cavity A2 inside the second gear ring 23 face each other to form a mounting space A (referring to FIG. 3), in which the first planetary carrier 11 and the first planetary gear 12 as well as the second planetary carrier 21 and the second planetary gear 22 are accommodated inside the mounting space A. In this way, the first gear ring 13 and the second gear ring 23 serve as external housings to protect the planetary carriers and the planetary gears accommodated therein, so as to prolong a service life thereof. In addition, with the cooperation of the implementation manner in which the end surface B1 of the first gear ring 13 is flush with the end surface B2 of the second gear ring 23 or the implementation manner in which the small gear ring (for example, the first gear ring 13) having the relatively small dimension is at least partially embedded into the large gear ring (for example, the second gear ring 23) having the relatively large dimension, the mounting space A may be enabled to be relatively closed, and it is difficult for external impurities to enter the mounting space A to affect the moving components therein, thereby ensuring stable working of the differential 100.

The meshing relationship between the first planetary gear 12 and the second planetary gear 22 is described in detail with reference to the specific embodiments as follows.

In a preferred embodiment of the present invention, a thickness of the first planetary gear 12 is different from a thickness of the second planetary gear 22 in the axial direction (referring to FIG. 10), which helps reduce the axial dimension of the differential 100 to some extent. Further, gear teeth of a relatively thin planetary gear, for example the second planetary gear 22, are completely meshed with gear teeth of a relatively thick planetary gear, for example the first planetary gear 12. The gear teeth of the relatively thick planetary gear extend in the axial direction toward one side and beyond the gear teeth of the relatively thin planetary gear or the gear teeth of the relatively thick planetary gear respectively extend in the axial direction toward two sides and beyond the gear teeth of the relatively thin planetary gear. In the example of the present invention, the gear teeth of the relatively thick planetary gear merely extend in the axial direction toward one side and beyond the gear teeth of the relatively thin planetary gear. For example, as shown in FIG. 9 and FIG. 10, the relatively thick first planetary gear 12 extends toward the left side and beyond the relatively thin second planetary gear 22, and the right side surface of the relatively thick first planetary gear 12 is flush with the right side surface of the relatively thin second planetary gear 22, thus facilitating the control over the axial dimension of the differential 100.

Because the first planetary gear 12 and the second planetary gear 22 have different revolution radiuses, with regard to the embodiment in which the planetary gears have different thicknesses, the revolution radius of the relatively thick planetary gear, for example the first planetary gear 12, is smaller than the revolution radius of the relatively thin planetary gear, for example the second planetary gear 22. In addition, the relatively thick planetary gear, for example the first planetary gear 12, corresponds to the small gear ring having a relatively small radial dimension, for example the first gear ring 13, and the relatively thin planetary gear, for example the second planetary gear 22, corresponds to the large gear ring having a relatively large axial dimension, for example the second gear ring 23, in which the outside diameter (an outer surface) of the large gear ring (i.e., the second gear ring 23) is greater than the outside diameter (an outer surface) of the small gear ring (i.e., the first gear ring 13). For example, in the example of the present invention, the thickness of the first planetary gear 12 is greater than the thickness of the second planetary gear 22, so that the first gear ring 13 corresponding to the relatively thick first planetary gear 12 is the small gear ring, the second gear ring 23 corresponding to the relatively thin second planetary gear 22 is the large gear ring, and the revolution radius of the first planetary gear 12 is smaller than the revolution radius of the second planetary gear 22.

In addition, it should be noted that the planetary gear having a relatively small revolution radius is meshed with the gear ring having a relatively small radius. In this case, the planetary gear having the relatively small revolution radius is the planetary gear having the relatively large thickness, a part of the planetary gear is meshed with internal teeth of the gear ring having the relatively small radius, and another part thereof is meshed with the planetary gear having a relatively large revolution radius, namely the relatively thin planetary gear.

In a preferred embodiment, the inside diameter of the large gear ring (for example, the second gear ring 23) is greater than the outside diameter of the small gear ring (for example, the first gear ring 13). Herein, the inside diameter of the large gear ring refers to a radial dimension of an addendum circle of the internal teeth of the large gear ring. In other words, a diameter of the addendum circle of the internal teeth of the large gear ring is greater than the outside diameter of the small gear ring. In this way, the small gear ring may be entirely or at least partially embedded into the large gear ring, that is the foregoing axial gap D is reduced to a negative numeral (that is, the small gear ring is embedded into the large gear ring). Hence, the two gear rings and the two planetary gears would not have moving interference or friction thereamong, thereby improving stability of the differential 100, and meanwhile, also making the internal space relatively closed, so as to protect internal components such as the planetary carriers and the planetary gears.

The power output end and the power input end of the differential 100 are described in detail with reference to the specific embodiments as follows.

As shown in FIG. 1 to FIG. 3, the differential 100 further includes input shafts 31, 32 and output shafts 41, 42, the input shafts 31, 32 are respectively connected to the first planetary carrier 11 and the second planetary carrier 21. As shown in the example of FIG. 3, a right side of the first planetary carrier 11 is connected to the input shaft 31 and a left side of the second planetary carrier 21 is connected to the input shaft 32. The output shafts 41, 42 are respectively connected to the first gear ring 13 and the second gear ring 23. As shown in the example of FIG. 3, a right side of the first gear ring 13 is connected to the output shaft 41, and a left side of the second gear ring 23 is connected to the output shaft 42. The input shafts 31, 32, the output shafts 41, 42, the first gear ring 13 and the second gear ring 23 may be coaxially disposed.

Further, as shown in FIG. 3, the input shaft includes a first input shaft 31 and a second input shaft 32, the first input shaft 31 is connected to the first planetary carrier 11, and the second input shaft 32 is connected to the second planetary carrier 21; the output shaft may include a first output shaft 41 and a second output shaft 42, the first output shaft 41 is connected to the first gear ring 13, and the second output shaft 42 is connected to the second gear ring 23; the first input shaft 31 and the second input shaft 32 as well as the first output shaft 41 and the second output shaft 42 all may be hollow shaft structures. In an embodiment, the first output shaft 41 is coaxially fitted over the first input shaft 31, and the second output shaft 42 is coaxially fitted over the second input shaft 32. Hence, the differential 100 has a more compact structure and a smaller volume.

According to some preferred embodiments of the present invention, both the first planetary gear 12 and the second planetary gear 22 are cylindrical gears. As compared with the conventional symmetrical angle gear differential, the differential 100 using cylindrical gears has a more compact structure. Specifically, the differential 100 using cylindrical gears has a higher space utilization ratio in terms of the structure and connection form, provides a smaller axial dimension, and has more advantages in production and assembly.

Brief description is made on the specific structure of the differential 100 shown in the embodiments by referring to FIG. 1 to FIG. 3 as follows. As shown in FIG. 1 to FIG. 3, a purality of first planetary gear shafts 14 and a purality of second planetary gear shafts 24 are disposed between the first planetary carrier 11 and the second planetary carrier 21, a purality of first planetary gears 12 are provided and correspondingly connected to the first planetary gear shafts 14, and a purality of second planetary gears 22 are provided and correspondingly connected to the second planetary gear shafts 24. The thickness of the first planetary gear 12 is larger than the thickness of the second planetary gear 22, the gear teeth of the relatively thin second planetary gear 22 are completely meshed with the gear teeth of the relatively thick first planetary gear 12, and the gear teeth of the relatively thick first planetary gear 12 may extend toward the left side and beyond the relatively thin second planetary gear 22. The first gear ring 13 corresponding to the relatively thick first planetary gear 12 is the small gear ring, the second gear ring 23 corresponding to the relatively thin second planetary gear 22 is the large gear ring, and the end surface B1 of the small gear ring (i.e., the first gear ring 13) and the end surface B2 of the large gear ring (i.e., the second gear ring 23) may be located in a same plane, so that the axial gap D between the small gear ring and the large gear ring is zero, and the mounting cavity A inside the gear rings is relatively more closed.

Hence, the differential 100 according to the preferred embodiments of the present invention utilizes a planetary gear in a cylindrical gear form, has a high space utilization ratio in terms of the structure and connection form, provides a small axial dimension, and has much advantages in production and assembly. The compact differential 100 further implements space and dimension avoidance of the planetary gear mechanisms at two sides by displacements of the planetary gear and the gear ring at one side (that is, the revolution radiuses of the planetary gears are different from each other). Such structural design greatly saves an axial gap for spatially avoiding the corresponding another group of planetary gear and gear ring, so that the compact differential 100 has a smaller axial dimension and is more compact.

In addition, in a case that the technical solutions and/or the technical features described in the foregoing embodiments are not in conflict with each other or in contradiction with each other, those skilled in the art can combine the technical solutions and/or the technical features in the foregoing embodiments with each other. The combined technical solution may be a superposition of two or more technical solutions, a superposition of two or more technical features, or a superposition of two or more technical solutions and technical features. Hence, the technical solutions and/or the technical features can interact with and support each other in terms of function, and the combined solution has better technical effects.

For example, those skilled in the art may combine the solution that an end surface, facing the second gear ring 23, of the first gear ring 13 and an end surface, facing the first gear ring 13, of the second gear ring 23 are located in a same plane with the solution of the structures of the first gear ring 13 and second gear ring 23. Hence, the axial gap between the two gear rings of the differential 100 is zero, so that the two gear rings can define a relatively closed mounting space to fully protect components inside the mounting space, thus prolonging service lifes thereof, reducing corresponding costs, and meanwhile, effectively reducing the axial dimension of the differential 100.

For another example, those skilled in the art can combine the solution that the thickness of the first planetary gear 12 is larger than the thickness of the second planetary gear 22 with the solution that the first gear ring 13 is a small gear ring and the second gear ring 23 is a large gear ring and the solution that the revolution radius of the first planetary gear 12 is smaller than the revolution radius of the second planetary gear 22. Hence, the combined solution of the differential 100 has a compact structure and a small volume, and can be conveniently disposed inside an engine compartment of the vehicle.

For still another example, those skilled in the art may combine the solution that an end surface, facing the second gear ring 23, of the first gear ring 13 and an end surface, facing the first gear ring 13, of the second gear ring 23 are located in a same plane with the solution of the meashing relationship between the relatively thick planetary gear and the relatively thin planetary gear. Hence, the axial gap between the two gear rings of the differential 100 is zero, so that the two gear rings can define a relatively closed mounting space to fully protect components inside the mounting space, thus prolonging service lifes thereof, and reducing corresponding costs. On another hand, the axial dimension of the differential 100 can also be further reduced, so that the differential 100 has a smaller volume.

It should be understood that the foregoing examples are merely illustrative. With regard to the combination of the technical solutions and/or the technical features, those skilled in the art can make a free combination in case of no conflict, and the combined solution has better technical effects. The present invention merely briefly describes the forgoing multiple examples, and the examples are not listed exhaustively one by one herein.

In addition, it could be understood that the combined technical solution also falls within the protection scope of the present invention.

Generally, the differential 100 according to embodiments of the present invention can effectively save space and reduce the weight. In an embodiment, as compared with the conventional angle gear differential, the planetary gear differential 100 can reduce the weight by approximately 30% and meanwhile, reduce the axial dimension by approximately 70%, so as to reduce the friction of the bearing, and also implement the torque distribution between the left and right wheels, so that the load distribution of the differential 100 is more proper and the rigidity of the differential 100 is better. In addition, because the cylindrical gear is used, the transmission efficiency is also improved to some extent. For example, the transmission efficiency of a conventional angle gear of 6-level precision or 7-level precision is approximately 0.97 to 0.98, and the transmission efficiency of the cylindrical gear of 6-level precision or 7-level precision is approximately 0.98 to 0.99. In addition, the use of the cylindrical gear also reduces working noise of the differential 100 and meanwhile reduces heat generation, thereby greatly prolonging the service life of the differential 100. Briefly, the differential 100 according to the embodiments of the present invention has many advantages such as a light weight, a small dimension, low costs, high transmission efficiency, low noise, less heat generation, and a long service life.

Meanwhile, a sun gear is omitted from the differential 100 according to the embodiments of the present invention, and omission of the sun gear has the following advantages.

In terms of mechanical analysis, the sun gear shall be omitted, and the speed differential shall be implemented by using a gear ring. Because as compared with the sun gear, the gear ring may be provided with more teeth, and meanwhile, has a larger pitch circle (the pitch circle refers to a pair of circles that are tangent to each other at a pitch point during the meshing transmission of gears), such that the load may be distributed more evenly and also the torque may be carried more evenly, which is beneficial to prolonging the service life of the differential 100. Meanwhile, in the absence of the sun gear, the differential 100 may be lubricated and cooled more favorably. That is, because the sun gear is omitted, a cavity may be formed inside the gear ring, the meshing between the gear ring and the planetary gear is an internal meshing (however, the meshing between the sun gear and the planetary gear is an external meshing), and thus lubricating oil may be stored inside the gear ring, so that the cooling and lubricating effects are greatly improved. In addition, because the sun gear is omitted, the number of parts is decreased, and the mass and cost of the differential 100 are reduced, so that the differential 100 is much smaller and lighter.

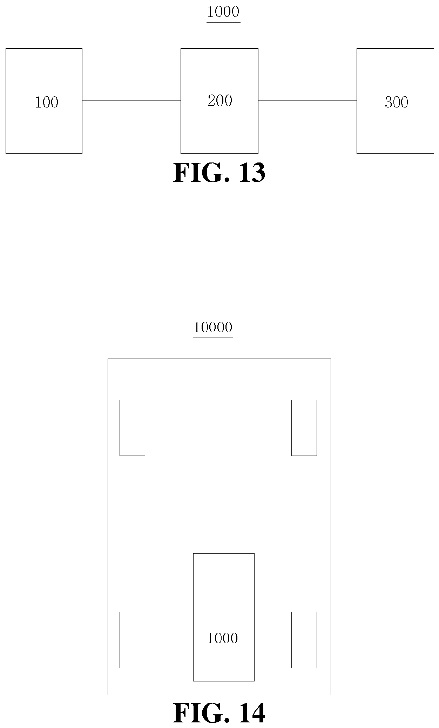

A power transmission system 1000 according to embodiments of the present invention is briefly described as follows. The power transmission system 1000 includes the differential 100 according to the foregoing embodiments of the present invention. As shown in FIG. 13, the power transmission system 1000 includes the differential 100, a transmission 200 and a power source 300. The power output from the power source 300 is output to the differential 100 after the speed changing action of the transmission 200 and then is distributed by the differential 100 to the driving wheels on two sides. It could be understood that the power transmission system 1000 shown in FIG. 13 is merely an example, instead of a limitation to the protection scope of the present invention. In addition, it should be understood that other configurations, such as the engine and the transmission, of the power transmission system according to the embodiment of the present invention all belong to the prior art and are well known to those skilled in the art, and therefore, are not described again herein one by one.

As shown in FIG. 14, a vehicle 10000 according to an embodiment of the present invention is briefly described as follows. The vehicle 10000 includes the power transmission system 1000 according to the foregoing embodiment of the present invention. The power transmission system 1000 may be used for a front wheel drive, and certainly, may also be used for a rear wheel drive, which is not specifically defined and limited by the present invention herein. It should be understood that other configurations, such as a braking system, a traveling system, and a steering system, of the vehicle according to the embodiment of the present invention all belong to the prior art and are well known to those skilled in the art, and therefore, are not described again herein one by one.

In the descriptions of this specification, a description of a reference term such as "an embodiment", "some embodiments", "exemplary embodiments", "examples", "specific examples", or "some examples" means that a specific feature, structure, material, or characteristic that is described with reference to the embodiment or the example is included in at least one embodiment or example of the present invention. In this specification, exemplary descriptions of the foregoing terms do not necessarily refer to a same embodiment or example. In addition, the described specific feature, structure, material, or characteristic may be combined in a proper manner in any one or more embodiments or examples. Moreover, those skilled in the art can joint and combine different embodiments or examples described in the present description.

Although the embodiments of the present invention have been shown and described, a person of ordinary skill in the art can understand that multiple changes, modifications, replacements, and variations may be made to these embodiments without departing from the principle and purpose of the present invention as claimed in the appended claims.

## Claims

1. A differential (100), comprising:
a first planetary carrier (11);
a first gear ring (13);
a first planetary gear (12) disposed on the first planetary carrier (11) and meshed with the first gear ring (13);
a second planetary carrier (21);
a second gear ring (23); and
a second planetary gear (22) disposed on the second planetary carrier (21) and meshed with the second gear ring (23) as well as the first planetary gear (12),
wherein the first gear ring (13) and the second gear ring (23) are configured as two power output ends of the differential (100), the first planetary carrier (11) and the second planetary carrier (21) are configured as power input ends of the differential (100), and a revolution radius (R1) of the first planetary gear (12) is different from a revolution radius (R2) of the second planetary gear (22),
**characterized in that**
an end surface (B1), facing the second gear ring (23), of the first gear ring (13) and an end surface (B2), facing the first gear ring (13), of the second gear ring (23) are located in a same plane (B3) or **in that**
one gear ring (13) having a smaller radius of the first gear ring (13) and the second gear ring (23) is at least partially embedded into the other gear ring (23) thereof having a larger radius; and
one planetary gear (12) having the smaller revolution radius (R1) of the first planetary gear (12) and the second planetary gear (22) is meshed with the gear ring (13) having the smaller radius, and the other planetary gear (22) thereof having the larger revolution radius (R2) is meshed with the gear ring (23) having the larger radius.

2. The differential (100) according to claim 1, wherein, if the one gear ring (13) is at least partially embedded into the other gear ring (23), each of the first gear ring (13) and the second gear ring (23) comprises:
a main flat plate portion (161); and
an annular sidewall portion (162) disposed at a peripheral edge of the main flat plate portion (161),
wherein a plurality of teeth are disposed on an inner wall surface of the annular sidewall portion (162), and an annular sidewall portion (162) of the gear ring (13) having the smaller radius is at least partially embedded into an annular sidewall portion (162) of the gear ring (23) having the larger radius.

3. The differential (100) according to claim 1, wherein, if the end surface (B1), facing the second gear ring (23), of the first gear ring (13) and the end surface (B2), facing the first gear ring (13), of the second gear ring (23) are located in the same plane (B3), each of the first gear ring (13) and the second gear ring (23) comprises:
a main flat plate portion (161); and
an annular sidewall portion (162) disposed at a peripheral edge of the main flat plate portion (161),
wherein a plurality of teeth are disposed on an inner wall surface of the annular sidewall portion (162), a cavity (A1, A2) is defined between the main flat plate portion (161) and the annular sidewall portion (162), and a cavity (A1) of the first gear ring (13) and a cavity (A2) of the second gear ring (23) face each other to form a mounting space (A); and particularly
wherein the first planetary carrier (11) and the first planetary gear (12) as well as the second planetary carrier (21) and the second planetary gear (22) are accommodated inside the mounting space (A).

4. The differential (100) according to any one of the claims 1 to 3, wherein a thickness of the first planetary gear (12) is different from a thickness of the second planetary gear (22) in an axial direction, and particularly
wherein gear teeth of one planetary gear (22) having a smaller thickness of the first planetary gear (12) and the second planetary gear (22) are completely meshed with gear teeth of the other planetary gear (12) thereof having a larger thickness, and the gear teeth of the planetary gear (12) having the larger thickness extend in an axial direction toward one side and beyond the gear teeth of the planetary gear (22) having the smaller thickness; or the gear teeth of the planetary gear (12) having the larger thickness respectively extend in an axial direction toward two sides and beyond the gear teeth of the planetary gear (22) having the smaller thickness.

5. The differential (100) according to claim 4, wherein the revolution radius (R1) of the planetary gear (12) having the larger thickness of the first planetary gear (12) and the second planetary gear (22) is smaller than the revolution radius (R2) of the other planetary gear (22) thereof having the smaller thickness.

6. The differential (100) according to any one of the claims 4 to 5, wherein the planetary gear (12) having the larger thickness of the first planetary gear (12) and the second planetary gear (22) is corresponding to one gear ring (13) having the smaller radius of the first gear ring (13) and the second gear ring (23), and the other planetary gear (22) thereof having the smaller thickness is corresponding to the other gear ring (23) thereof having the larger radius.

7. The differential (100) according to any one of the claims 1 to 6, further comprising:
an input shaft (31, 32) connected to the first planetary carrier (11) and the second planetary carrier (21) respectively; and
an output shaft (41, 42) connected to the first gear ring (13) and the second gear ring (23) respectively,
wherein the input shaft (31, 32) and the output shaft (41, 42) are disposed coaxially.

8. The differential (100) according to claim 7, wherein the input shaft (31, 32) comprises:
a first input shaft (31) connected to the first planetary carrier (11); and
a second input shaft (32) connected to the second planetary carrier (21),
wherein the output shaft (41, 42) comprises:
a first output shaft (41) connected to the first gear ring (13) and coaxially fitted over the first input shaft (31); and
a second output shaft (42) connected to the second gear ring (23) and coaxially fitted over the second input shaft (32).

9. The differential (100) according to any one of claims 1 to 8, wherein both the first planetary carrier (11) and the second planetary carrier (21) are configured as circular plate-shaped structures, and the first planetary carrier (11) and the second planetary carrier (21) are configured as separated structures; and/or
wherein a revolution axis (O) of the first planetary gear (12) coincides with a revolution axis (O) of the second planetary gear (22); and/or
wherein the first planetary gear (12) and the second planetary gear (22) both are configured as cylindrical gears.

10. The differential (100) according to any one of claims 1 to 9, wherein each first planetary gear (12) is provided with a first planetary gear shaft (14), two ends of the first planetary gear shaft (14) are connected to the first planetary carrier (11) and the second planetary carrier (21) respectively; and
each second planetary gear (22) is provided with a second planetary gear shaft (24), and two ends of the second planetary gear shaft (24) are connected to the first planetary carrier (11) and the second planetary carrier (21) respectively.

11. The differential (100) according to any one of claims 1 to 10, wherein a plurality of first planetary gears (12) are provided and distributed at intervals along a circumferential direction, a plurality of second planetary gears (22) are provided and distributed at intervals along the circumferential direction, and the plurality of first planetary gears (12) are correspondingly meshed with the plurality of second planetary gears respectively (22); or
wherein a plurality of first planetary gears (12) and a plurality of second planetary gears (22) are provided, the plurality of first planetary gears (12) and the plurality of second planetary gears (22) are disposed alternately along a circumferential direction, and the first planetary gear (12) is meshed with the second planetary gear (22) adjacent thereto.

12. A power transmission system (1000), comprising a differential (100) according to any one of claims 1 to 11.

13. A vehicle (10000), comprising a power transmission system (1000) according to claim 12.

## Patentansprüche

1. Differential (100), umfassend:
einen ersten Planetenträger (11);
ein erstes Hohlrad (13);
ein erstes Planetenrad (12), das auf dem ersten Planetenträger (11) angeordnet ist und mit dem ersten Hohlrad (13) in Eingriff steht;
einen zweiten Planetenträger (21);
ein zweites Hohlrad (23); und
ein zweites Planetenrad (22), das auf dem zweiten Planetenträger (21) angeordnet ist und sowohl mit dem zweiten Hohlrad (23) als auch mit dem ersten Planetenrad (12) in Eingriff steht,
wobei das erste Hohlrad (13) und das zweite Hohlrad (23) als zwei Abtriebsenden des Differentials (100) eingerichtet sind, der erste Planetenträger (11) und der zweite Planetenträger (21) als Antriebsenden des Differentials (100) eingerichtet sind, und ein Umdrehungsradius (R1) des ersten Planetenrads (12) von einem Umdrehungsradius (R2) des zweiten Planetenrads (22) verschieden ist **dadurch gekennzeichnet, dass**
eine dem zweiten Hohlrad (23) zugewandte Stirnfläche (B1) des ersten Hohlrads (13) und eine dem ersten Hohlrad (13) zugewandte Stirnfläche (B2) des zweiten Hohlrads (23) in einer gleichen Ebene (B3) liegen oder dass ein Hohlrad (13) mit einem kleineren Radius des ersten Hohlrads (13) und des zweiten Hohlrads (23) zumindest teilweise in das andere Hohlrad (23) derselben mit einem größeren Radius eingebettet ist; und
ein Planetenrad (12), das den kleineren Umlaufradius (R1) des ersten Planetenrads (12) und des zweiten Planetenrads (22) aufweist, mit dem Hohlrad (13), das den kleineren Radius aufweist, in Eingriff steht, und das andere Planetenrad (22), das den größeren Umlaufradius (R2) aufweist, mit dem Hohlrad (23), das den größeren Radius aufweist, in Eingriff steht.

2. Differential (100) nach Anspruch 1, wobei, wenn das eine Hohlrad (13) zumindest teilweise in das andere Hohlrad (23) eingebettet ist, sowohl das erste Hohlrad (13) als auch das zweite Hohlrad (23) Folgendes umfasst::
einen flachen Hauptplattenabschnitt (161); und
einen ringförmigen Seitenwandabschnitt (162), der an einer Außenkante des flachen Hauptplattenabschnitts (161) angeordnet ist,
wobei eine Vielzahl von Zähnen an einer Innenwandfläche des ringförmigen Seitenwandabschnitts (162) angeordnet ist, und ein ringförmiger Seitenwandabschnitt (162) des Hohlrads (13) mit dem kleineren Radius zumindest teilweise in einen ringförmigen Seitenwandabschnitt (162) des Hohlrads (23) mit dem größeren Radius eingebettet ist.

3. Differential (100) nach Anspruch 1, wobei, wenn die dem zweiten Hohlrad (23) zugewandte Stirnfläche (B1) des ersten Hohlrads (13) und die dem ersten Hohlrad (13) zugewandte Stirnfläche (B2) des zweiten Hohlrads (23) in der gleichen Ebene (B3) liegen, das erste Hohlrad (13) und das zweite Hohlrad (23) jeweils Folgendes umfassen: einen
einen flachen Hauptplattenabschnitt (161); und
einen ringförmigen Seitenwandabschnitt (162), der an einer Außenkante des flachen Hauptplattenabschnitts (161) angeordnet ist,
wobei eine Vielzahl von Zähnen an einer Innenwandfläche des ringförmigen Seitenwandabschnitts (162) angeordnet ist, ein Hohlraum (A1, A2) zwischen dem flachen Hauptplattenabschnitt (161) und dem ringförmigen Seitenwandabschnitt (162) definiert ist und ein Hohlraum (A1) des ersten Hohlrads (13) und ein Hohlraum (A2) des zweiten Hohlrads (23) einander gegenüberliegen, um einen Montageraum (A) zu bilden; und insbesondere
wobei der erste Planetenträger (11) und das erste Planetenrad (12) sowie der zweite Planetenträger (21) und das zweite Planetenrad (22) innerhalb des Montageraums (A) untergebracht sind.

4. Differential (100) nach einem der Ansprüche 1 bis 3, wobei eine Dicke des ersten Planetenrads (12) von einer Dicke des zweiten Planetenrads (22) in axialer Richtung verschieden ist, und insbesondere
wobei Zähne eines Planetenrades (22) mit einer geringeren Dicke des ersten Planetenrades (12) und des zweiten Planetenrades (22) vollständig mit Zähnen des anderen Planetenrades (12) derselben mit einer größeren Dicke in Eingriff stehen, und die Zähne des Planetenrades (12) mit der größeren Dicke sich in axialer Richtung zu einer Seite hin und über die Zähne des Planetenrades (22) mit der geringeren Dicke hinaus erstrecken; oder die Zähne des Planetenrads (12) mit der größeren Dicke sich jeweils in einer axialen Richtung zu zwei Seiten hin und über die Zähne des Planetenrads (22) mit der kleineren Dicke hinaus erstrecken.

5. Differential (100) nach Anspruch 4, wobei der Umlaufradius (R1) des Planetenrads (12) mit der größeren Dicke des ersten Planetenrads (12) und des zweiten Planetenrads (22) kleiner ist als der Umlaufradius (R2) des anderen Planetenrads (22) derselben mit der kleineren Dicke.

6. Differential (100) nach einem der Ansprüche 4 bis 5, wobei das Planetenrad (12) mit der größeren Dicke des ersten Planetenrads (12) und des zweiten Planetenrads (22) dem einen Hohlrad (13) mit dem kleineren Radius des ersten Hohlrads (13) und des zweiten Hohlrads (23) entspricht, und das andere Planetenrad (22) derselben mit der kleineren Dicke dem anderen Hohlrad (23) derselben mit dem größeren Radius entspricht.

7. Differential (100) nach einem der Ansprüche 1 bis 6, das ferner umfasst:
eine Antriebswelle (31, 32), die mit dem ersten Planetenträger (11) bzw. dem zweiten Planetenträger (21) verbunden ist; und
eine Abtriebswelle (41, 42), die mit dem ersten Hohlrad (13) bzw. dem zweiten Hohlrad (23) verbunden ist,
wobei die Antriebswelle (31, 32) und die Abtriebswelle (41, 42) koaxial angeordnet sind.

8. Differential (100) nach Anspruch 7, wobei die Antriebswelle (31, 32) Folgendes umfasst:
eine erste Antriebswelle (31), die mit dem ersten Planetenträger (11) verbunden ist; und
eine zweite Antriebswelle (32), die mit dem zweiten Planetenträger (21) verbunden ist,
wobei die Abtriebswelle (41, 42) umfasst:
eine erste Abtriebswelle (41), die mit dem ersten Hohlrad (13) verbunden ist und koaxial über der ersten Antriebswelle (31) angeordnet ist; und
eine zweite Abtriebswelle (42), die mit dem zweiten Hohlrad (23) verbunden ist und koaxial über der zweiten Eingangswelle (32) angeordnet ist.

9. Differential (100) nach einem der Ansprüche 1 bis 8, wobei sowohl der erste Planetenträger (11) als auch der zweite Planetenträger (21) als runde plattenförmige Strukturen ausgebildet sind, und der erste Planetenträger (11) und der zweite Planetenträger (21) als getrennte Strukturen ausgebildet sind; und/oder
wobei eine Drehachse (0) des ersten Planetenrads (12) mit einer Drehachse (0) des zweiten Planetenrads (22) zusammenfällt; und/oder
wobei das erste Planetenrad (12) und das zweite Planetenrad (22) beide als Zylinderräder ausgebildet sind.

10. Differential (100) nach einem der Ansprüche 1 bis 9, wobei jedes erste Planetenrad (12) mit einer ersten Planetenradwelle (14) versehen ist, zwei Enden der ersten Planetenradwelle (14) jeweils mit dem ersten Planetenträger (11) und dem zweiten Planetenträger (21) verbunden sind; und
jedes zweite Planetenrad (22) eine zweite Planetenradwelle (24) aufweist, und zwei Enden der zweiten Planetenradwelle (24) jeweils mit dem ersten Planetenradträger (11) und dem zweiten Planetenradträger (21) verbunden sind.

11. Differential (100) nach einem der Ansprüche 1 bis 10, wobei mehrere erste Planetenräder (12) vorgesehen und in Abständen entlang einer Umfangsrichtung verteilt sind, mehrere zweite Planetenräder (22) vorgesehen und in Abständen entlang der Umfangsrichtung verteilt sind, und die mehreren ersten Planetenräder (12) entsprechend mit den mehreren zweiten Planetenrädern (22) in Eingriff stehen; oder
wobei eine Vielzahl von ersten Planetenrädern (12) und eine Vielzahl von zweiten Planetenrädern (22) vorgesehen sind, die Vielzahl von ersten Planetenrädern (12) und die Vielzahl von zweiten Planetenrädern (22) abwechselnd entlang einer Umfangsrichtung angeordnet sind, und das erste Planetenrad (12) mit dem dazu benachbarten zweiten Planetenrad (22) in Eingriff steht.

12. Kraftübertragungssystem (1000), umfassend ein Differential (100) nach einem der Ansprüche 1 bis 11.

13. Fahrzeug (10000), umfassend ein Kraftübertragungssystem (1000) nach Anspruch 12.

## Revendications

1. Différentiel (100), comprenant :
un premier porte-satellites (11) ;
une première couronne dentée (13) ;
un premier engrenage satellite (12) disposé sur le premier porte-satellites (11) et engrené avec la première couronne dentée (13) ;
un deuxième porte-satellites (21) ;
une deuxième couronne dentée (23) ; et
un deuxième engrenage satellite (22) disposé sur le deuxième porte-satellites (21) et engrené avec la deuxième couronne dentée (23) ainsi qu'avec le premier engrenage satellite (12),
dans lequel la première couronne dentée (13) et la deuxième couronne dentée (23) sont configurées comme deux terminaux de sortie de puissance du différentiel (100), le premier porte-satellites (11) et le deuxième porte-satellites (21) sont configurés comme des terminaux d'entrée de puissance du différentiel (100), et un rayon de rotation (R1) du premier engrenage satellite (12) est différent d'un rayon de rotation (R2) du deuxième engrenage satellite (22),
**caractérisé en ce que**
une surface terminale (B1) de la première couronne dentée (13), orientée vers la deuxième couronne dentée (23), et une surface terminale (B2) de la deuxième couronne dentée (23), orientée vers la première couronne dentée (13), sont situées dans un même plan (B3) ou **en ce que**
une couronne dentée (13) ayant un rayon inférieur de la première couronne dentée (13) et la deuxième couronne dentée (23) est au moins partiellement encastrée dans l'autre couronne dentée (23) de celles-ci ayant un rayon supérieur ; et
un engrenage satellite (12) ayant le rayon de rotation inférieur (R1) du premier engrenage satellite (12) et du deuxième engrenage satellite (22) est engrené avec la couronne dentée (13) ayant le rayon inférieur, et l'autre engrenage satellite (22) de ceux-ci ayant le rayon de rotation supérieur (R2) est engrené avec la couronne dentée (23) ayant le rayon supérieur.

2. Différentiel (100) selon la revendication 1, dans lequel, si une couronne dentée (13) est au moins partiellement encastrée dans l'autre couronne dentée (23), chacune de la première couronne dentée (13) et de la deuxième couronne dentée (23) comprend :
une partie de plaque principale plane (161) ; et une partie de paroi latérale annulaire (162) disposée au niveau d'un bord périphérique de la partie de plaque principale plane (161).
une partie de paroi latérale annulaire (162) disposée au niveau d'un bord périphérique de la partie de plaque principale plane (161),
dans lequel une pluralité de dents sont disposées sur une surface de paroi interne de la partie de paroi latérale annulaire (162), et une partie de paroi latérale annulaire (162) de la couronne dentée (13) ayant le rayon inférieur est au moins partiellement encastrée dans une partie de paroi latérale annulaire (162) de la couronne dentée (23) ayant le rayon supérieur.

3. Différentiel (100) selon la revendication 1, dans lequel, si la surface terminale (B1) de la première couronne dentée (13), orientée vers la deuxième couronne dentée (23), et la surface terminale (B2) de la deuxième couronne dentée (23), orientée vers la première couronne dentée (13), sont situées dans le même plan (B3), la première couronne dentée (13) et la deuxième couronne dentée (23) comprennent chacune
une partie de plaque principale plane (161) ; et
une partie de paroi latérale annulaire (162) disposée au niveau d'un bord périphérique de la partie de plaque principale plane (161),
dans lequel une pluralité de dents sont disposées sur une surface de paroi intérieure de la partie de paroi latérale annulaire (162), une cavité (A1, A2) est définie entre la partie de plaque principale plane (161) et la partie de paroi latérale annulaire (162), et une cavité (A1) de la première couronne dentée (13) et une cavité (A2) de la deuxième couronne dentée (23) se font face pour former un espace de montage (A) ; et en particulier
dans lequel le premier porte-satellites (11) et le premier engrenage satellite (12) ainsi que le deuxième porte-satellites (21) et le deuxième engrenage satellite (22) sont logés à l'intérieur de l'espace de montage (A).

4. Différentiel (100) selon l'une quelconque des revendications 1 à 3, dans lequel une épaisseur du premier engrenage satellite (12) est différente d'une épaisseur du deuxième engrenage satellite (22) dans une direction axiale, et en particulier
dans lequel les dents d'un engrenage satellite (22) ayant une épaisseur inférieure du premier engrenage satellite (12) et du deuxième engrenage satellite (22) sont complètement engrenées avec les dents de l'autre engrenage satellite (12) de ceux-ci ayant une épaisseur supérieure, et les dents de l'engrenage satellite (12) ayant l'épaisseur supérieure s'étendent dans une direction axiale vers un côté et au-delà des dents de l'engrenage satellite (22) ayant l'épaisseur inférieure ; ou les dents de l'engrenage satellite (12) ayant l'épaisseur supérieure s'étendent respectivement dans une direction axiale vers deux côtés et au-delà des dents de l'engrenage satellite (22) ayant l'épaisseur inférieure.

5. Différentiel (100) selon la revendication 4, dans lequel le rayon de révolution (R1) de l'engrenage satellite (12) ayant l'épaisseur supérieure du premier engrenage satellite (12) et du deuxième engrenage satellite (22) est inférieur au rayon de révolution (R2) de l'autre engrenage satellite (22) de ceux-ci ayant l'épaisseur inférieure.

6. Différentiel (100) selon l'une quelconque des revendications 4 à 5, dans lequel l'engrenage satellite (12) ayant l'épaisseur supérieure du premier engrenage satellite (12) et du deuxième engrenage satellite (22) correspond à une couronne d'engrenage (13) ayant le rayon inférieur de la première couronne d'engrenage (13) et de la deuxième couronne d'engrenage (23), et l'autre engrenage satellite (22) de ceux-ci ayant l'épaisseur inférieure correspond à l'autre couronne d'engrenage (23) de celles-ci ayant le rayon supérieur.

7. Différentiel (100) selon l'une quelconque des revendications 1 à 6, comprenant en outre :
un arbre d'entrée (31, 32) relié respectivement au premier porte-satellites (11) et au deuxième porte-satellites (21) ; et
un arbre de sortie (41, 42) relié à la première couronne dentée (13) et à la deuxième couronne dentée (23) respectivement,
dans lequel l'arbre d'entrée (31, 32) et l'arbre de sortie (41, 42) sont disposés coaxialement.

8. Différentiel (100) selon la revendication 7, dans lequel l'arbre d'entrée (31, 32) comprend :
un premier arbre d'entrée (31) relié au premier porte-satellites (11) ; et
un deuxième arbre d'entrée (32) relié au deuxième porte-satellites (21),
dans lequel l'arbre de sortie (41, 42) comprend :
un premier arbre de sortie (41) relié à la première couronne dentée (13) et monté coaxialement sur le premier arbre d'entrée (31) ; et
un deuxième arbre de sortie (42) relié à la deuxième couronne dentée (23) et monté coaxialement sur le deuxième arbre d'entrée (32).

9. Différentiel (100) selon l'une quelconque des revendications 1 à 8, dans lequel le premier porte-satellites (11) et le deuxième porte-satellites (21) sont configurés comme des structures en forme de plaque circulaire, et le premier porte-satellites (11) et le deuxième porte-satellites (21) sont configurés comme des structures séparées ; et/ou
dans lequel un axe de rotation (0) du premier engrenage satellite (12) coïncide avec un axe de rotation (0) du deuxième engrenage satellite (22) ; et/ou dans lequel le premier engrenage satellite (12) et le deuxième engrenage satellite (22) sont tous deux configurés comme des engrenages cylindriques.

10. Différentiel (100) selon l'une quelconque des revendications 1 à 9, dans lequel chaque premier engrenage satellite (12) est pourvu d'un premier arbre d'engrenage satellite (14), deux extrémités du premier arbre d'engrenage satellite (14) sont reliées au premier porte-satellites (11) et au deuxième porte-satellites (21) respectivement; et
chaque deuxième engrenage satellite (22) est pourvu d'un deuxième arbre d'engrenage satellite (24), et deux extrémités du deuxième arbre d'engrenage satellite (24) sont reliées respectivement au premier porte-satellites (11) et au deuxième porte-satellites (21).

11. Différentiel (100) selon l'une quelconque des revendications 1 à 10, dans lequel une pluralité de premiers engrenages satellites (12) sont prévus et répartis à intervalles le long d'une direction circonférentielle, une pluralité de deuxièmes engrenages satellites (22) sont prévus et répartis à intervalles le long de la direction circonférentielle, et la pluralité de premiers engrenages satellites (12) sont engrenés de manière correspondante avec la pluralité de deuxièmes engrenages satellites respectivement (22) ; ou
dans lequel une pluralité de premiers engrenages satellites (12) et une pluralité de deuxièmes engrenages satellites (22) sont prévus, la pluralité de premiers engrenages satellites (12) et la pluralité de deuxièmes engrenages satellites (22) sont disposés alternativement le long d'une direction circonférentielle, et le premier engrenage satellite (12) est engrené avec le deuxième engrenage satellite (22) adjacent à celui-ci.

12. Système de transmission de puissance (1000), comprenant un différentiel (100) selon l'une quelconque des revendications 1 à 11.

13. Véhicule (10000), comprenant un système de transmission de puissance (1000) selon la revendication 12.
